# EUROPEAN PATENT SPECIFICATION

(11) **EP 2 864 585 B1**
(45) Date of publication and mention of the grant of the patent: **18.10.2017**
(21) Application number: 13810249.6
(22) Date of filing: 26.06.2013
(51) Int. Cl.: C09K 8/528

(54) **METHOD OF REMOVING INORGANIC SCALES**
VERFAHREN ZUR ENTFERNUNG ANORGANISCHER ABLAGERUNGEN
PROCÉDÉ D'ÉLIMINATION DES DÉPÔTS INORGANIQUES

(30) Priority: 26.06.2012 US 201213533031
(43) Date of publication of application: 29.04.2015
(73) Proprietor: Baker Hughes Incorporated, Houston, TX 77019 (US)
(72) Inventor: QU, Qi, Spring, Texas 77379 (US); GOMAA, Ahmed M., Tomball, Texas 77375 (US)
(74) Representative: Beacham, Annabel Rose
(86) International application number: PCT/US2013/047938
(87) International publication number: WO 2014/004697

(56) References cited:
- US-A- 4 447 342
- US-A- 4 792 417
- US-A- 5 529 125
- US-A1- 2009 075 844
- US-A1- 2010 119 851
- US-A1- 2010 314 116
- US-B1- 6 443 230

## Description

### Field of the Invention

The invention relates to a method of enhancing the productivity of a hydrocarbon bearing siliceous or calcareous formation by use of a well treatment composition which contains a phosphonate acid, ester or salt, a hydrofluoric acid source, a quaternary ammonium salt and an organosilane.

### Background of the Invention

In the course of drilling, or during production or workover, the vast majority of oil and gas wells are exposed to conditions that ultimately lead to formation damage. Formation damage limits the productive (or injective) capacity of the well. The reduction in well performance is generally due to changes in near-wellbore permeability which may be caused by a number of factors, such as rock crushing, invasion of drill solids, swelling of pore-lining clays, migration of mobile fines and changes in wettability.

For instance, the swelling and migration of formation clay particles is often increased when formation clays are disturbed by foreign substances, such as aqueous well treatment fluids. The swelling and migration of formation clay reduces the permeability of the formation by obstructing the formation capillaries, resulting in a loss of formation permeability and significant reduction in the flow rate of hydrocarbons. Typically, the use of clay stabilizers is required during treatment operations in order to control any change or movement of the clay. In addition to inhibiting the swelling and/or migration of clay, such additives are useful in the control of fines generation which further contribute to a reduction in permeability.

It is known that permeability impairment may also be improved by injecting acid formulations containing HF into the formation. Such methods are known to improve production from both subterranean calcareous and siliceous formations. US 5,529,125 discloses acid treatment methods for siliceous formations. US 2009/0075844 A1 discloses a method and composition for controlling inorganic fluoride scales. US 6,443,230 discloses an organic hydrofluoric acid spearhead system.

Most sandstone formation are composed of over 70% sand quartz, i.e. silica, bonded together by various amount of cementing material including carbonate, dolomite and silicates. Suitable silicates include clays and feldspars. A common method of treating sandstone formations involves introducing hydrofluoric acid into the wellbore and allowing the hydrofluoric acid to react with the surrounding formation. Hydrofluoric acid exhibits high reactivity towards siliceous minerals, such as clays and quartz fines. For instance, hydrofluoric acid reacts very quickly with authigenic clays, such as smectite, kaolinite, illite and chlorite, especially at temperatures above 150°F (65.6°C). As such, hydrofluoric acid is capable of attacking and dissolving siliceous minerals.

Upon contact of hydrofluoric acid with metallic ions present in the formation, such as sodium, potassium, calcium and magnesium, undesirable precipitation reactions occur. For example, during the treatment of calcareous or siliceous formations containing carbonate or dolomite, calcium or magnesium fluoride scales often form as a result of precipitation. Such scales tend to plug the pore spaces and reduce the porosity and permeability of the formation.

Alternative methods of treating calcareous or siliceous formations with hydrofluoric acid have been sought wherein the formation of undesirable scales is prevented or inhibited while minimizing or preventing the swelling and migration of formation clay particles and the generation of fines.

### Summary of the Invention

Subterranean sandstone or siliceous formations and calcareous formations penetrated by oil, gas or geothermal wells may be treated with an aqueous well treatment composition containing a hydrofluoric acid source in combination with an organosilane, a quaternary ammonium salt and a phosphonate acid, ester or salt. The well treatment composition may further contain a boron containing compound for forming a BF₄⁻ complex.

The aqueous well treatment composition aids in the inhibition of inorganic scales and in most instances the prevention of formation of the undesirable scales. Additionally, it will minimize corrosion potential on downhole metal tubulars. Such compositions have been shown to increase the permeability of the formation being treated by inhibiting or preventing the formation of undesirable inorganic scales, such as calcium fluoride, magnesium fluoride, potassium fluorosilicate, sodium fluorosilicate, fluoroaluminate, etc. As a result, production from the formation is increased or improved.

While the hydrofluoric acid source may be hydrofluoric acid, it more typically is prepared in-situ in the aqueous system by the reaction of hydrochloric acid and ammonium bifluoride or ammonium fluoride. In the current invention, an excess of ammonium bifluoride or ammonium fluoride is used such that all of the hydrochloric acid is consumed in the production of hydrofluoric acid, leaving a small amount of unconverted ammonium bifluoride or ammonium fluoride.

When present, the boron containing compound is preferably fluoroboric acid or a boron compound which is capable of being hydrolyzed to form a BF₄⁻ complex when exposed to F⁻ or a hydrofluoric acid source.

The phosphonate of the well treatment composition is preferably a phosphonate acid, ester or salt thereof, such as those of the formula: 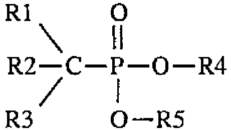 wherein R1, R2 and R3 are independently selected from hydrogen, alkyl, aryl, phosphonic, phosphonate, phosphate, aminophosphonic, aminophosphonate, acyl, amine, hydroxy and carboxyl groups and salts thereof and R4 and R5 are independently selected from hydrogen, sodium, potassium, ammonium or an organic radical.

The presence of the combination of the organosilane and the quaternary ammonium salt in the well treatment composition further provides for greater control of clay migration and inhibits or prevents swelling. Further, the presence of the combination of the organosilane and the quaternary ammonium salt inhibits or prevents formation fines from becoming dispersed in the well treatment composition. In addition, this combination aids in the inhibition and thus the control of scale formation.

The pH of the well treatment composition is typically maintained at a range of from about 0 to about 3.0.

### Detailed Description of the Preferred Embodiments

The permeability of sandstone or siliceous formations and calcareous formations is increased during acid treatment of the well by including in an aqueous well treatment composition a synergistic amount of an organosilane and a quaternary ammonium salt. The aqueous well treatment composition further contains a hydrofluoric acid source and a phosphonate compound.

The combination of the organosilane and the quaternary ammonium salt acts synergistically to control the swelling and migration of clay within the formation and to minimize the generation of fines. In particular, the effect imparted by the combination of the quaternary ammonium salt and the organosilane is substantially greater than the effect imparted by either component when used individually in an otherwise identical well treatment composition. The combination of the quaternary ammonium salt and organosilane acts to retrain the naturally occurring clay platelets in the formation in position by controlling the charge and electrolytic characteristics of the treatment fluid and thus substantially reduces or eliminates clay and formation fines from becoming dispersed and plugging the formation matrix.

The aqueous well treatment composition may further contain a boron containing compound. When present, the boron containing compound principally functions to inhibit or prevent the formation of fluoride scales or to remove such scales from wellbores, screens or other equipment and/or pipelines.

In a preferred embodiment, the boron containing compound is fluoroboric acid or tetrafluoroboric acid of the formula BF₄⁻ H⁺.

The boron containing compound may further be an acid soluble boric acid and/or an organic boron containing compound, including those which are capable of forming a BF⁻ complex when hydrolyzed and exposed to F⁻ or HF containing solution. The reaction, where the boron containing compound is boric acid, may be represented by the equation:

4HF + H₃BO₃ → BF₄⁻ + H₃O⁺ + 2H₂O (I).

The formation of BF₄⁻ controls the concentration of active HF at any given time. Borate esters further acid hydrolyze to boric acid which tender the BF₄⁻ complex, as set forth by equation (I) above. Hydrolysis may not occur, however, until higher than ambient temperatures are reached. For instance, hydrolysis may not occur until formation temperature is reached or sufficient heat is generated from the acid reaction.

Suitable boron containing compounds include boric acid, H₃BO₃ as well as esters of boric acid. Preferred as the boron containing compounds are those of the formula R₆R₇R₈BO₃ wherein each of R₆, R₇ and R₈ are independently hydrogen or a unsubstituted or substituted alkyl or alkylene group, and is preferably independently selected from hydrogen or C₁-C₄ alkyl group, optionally substituted with one or more -OH groups. Preferred boron compounds include tributyl borate which is very moisture sensitive.

Also preferred are tetraborates, such as sodium tetraborate. Boric oxide, B₂O₃, metaboric acid and HBO₂ are further preferred since they easily hydrolyze to boric acid, B(OH)₃.

Boric acid reacts rapidly with polyols, glycerol α-hydroxycarboxylic acids, cis-1,2-diols, cis-1,3-diosl, o-quinols, o-catechol and mannitol to form ether type complexes. For instance, three molecules of water are generated with mannitol and the last proton, H⁺, is associated with the molecule which can be quantitatively titrated with NaOH. In the presence of HF, such compounds would readily form the BF₄⁻ complex.

Further preferred boron containing compounds are cyclic borate esters, such as those of the formula: 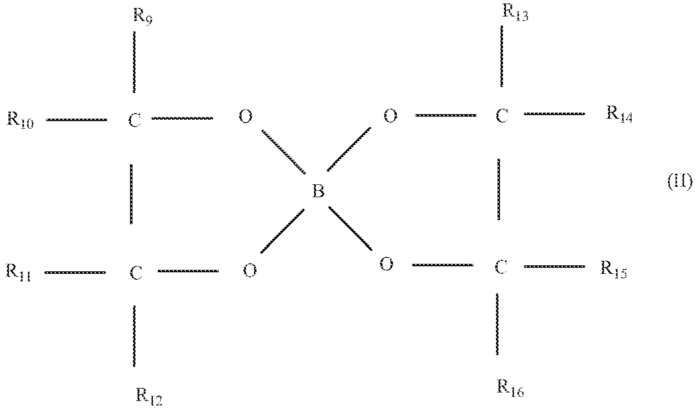 wherein each of R₉, R₁₀, R₁₁, R₁₂, R₁₃, R₁₄, R₁₅ and R₁₆ is independently selected from hydrogen or a substituted or unsubstituted alkyl or alkenyl group, and is preferably independently selected from hydrogen or a C₁-C₄ alkyl group, optionally substituted with one or more -OH groups or OR₁₃ (which can readily cleave to form the desired BF₄⁻ complex), wherein R₁₃ is a C₁-C₉ alkyl or aryl group. Suitable esters include those formed with salicyclic acid or acetic acid. Other cyclic borates include CH₃B₃O₃ which hydrolyze rapidly in water.

The presence of BF₄⁻ controls the concentration of active HF at any given time. As a result, the formation of calcium and magnesium fluoride, sodium or potassium fluorosilicate, or fluoroaluminate scales is prevented or inhibited.

Typically, the amount of boron containing compound in the well treating composition is that sufficient to impart to the composition between from about 0.5 to about 10 g of BF₄⁻ complex per 100 cc of phosphonate, hydrofluoric acid source and water.

The hydrofluoric acid source, useful in the formation of the BF₄⁻ complex may be hydrofluoric acid. More typically, however, the hydrofluoric acid source is the combination of a mineral acid and ammonium bifluoride or ammonium fluoride. Reaction of the acid with the ammonium bifluoride or ammonium fluoride renders HF. The use of the combination of acid and ammonium bifluoride or ammonium fluoride and boric acid to control hydrogen fluoride significantly slows the hydrofluoric acid reaction rate.

Preferred as the acid is hydrochloric acid, though other acids such as citric, chloroacetic, methanesulfonic, sulfuric, sulfamic, nitric, acetic, lactic, fumaric and formic acid may also be used. Preferred organic acids include citric acid, acetic acid and formic acid. A retarder may also be used, such as an aluminum salt.

In the reaction, ammonium bifluoride or ammonium fluoride hydrolyzes and is converted to hydrofluoric acid. When ammonium bifluoride or ammonium fluoride is used as a source of hydrofluoric acid, typically less acid is present than is necessary to hydrolyze all of the ammonium bifluoride or ammonium fluoride. Thus, there remains some unconverted ammonium bifluoride or ammonium fluoride in the composition.

The hydrofluoric acid source of the aqueous well treatment composition generally provides between from about 0.25 to about 10, typically between from about 1.0 to about 6.0, weight percent of hydrofluoric acid to the well treatment composition (based on the total weight of the well treatment composition).

When present, the well treatment composition may further contain between from about 1 to about 50 weight percent of organic acid, preferably about 10 weight percent based on the total weight of the well treatment composition.

The phosphonate compound principally functions as a stabilizer. The phosphonate compound may be a polyphosphonic acid and their salts and esters and is preferably a phosphonate acid, salt or ester thereof. Preferred are phosphonate materials of the formula: 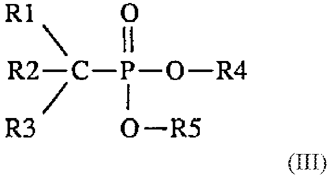 wherein R1, R2 and R3 are independently selected from hydrogen, alkyl, aryl, phosphonic, phosphonate, phosphate, aminophosphonic, aminophosphonate, acyl, amine, hydroxy and carboxyl groups and salts thereof and R4 and R5 are independently selected from hydrogen, sodium, potassium, ammonium or an organic radical. Preferred organic radicals are CₙH₂ₙ₊₁ wherein n is between from 1 to about 5.

Preferred as R1, R2 and R3 are aminophosphonate and aminophosphonic groups which may optionally be substituted with alkyl, phosphonic, aminophosphonic, phosphate and phosphonate groups.

Examples of preferred phosphonate acids, esters or salts include aminotri (methylene phosphonic acid) and its pentasodium salt, 1-hydroxyethylidene-1,1-diphosphonic acid and its tetrasodium salt, hexamethylenediaminetetra (methylene phosphonic acid) and its hexapotassium salt, and diethylenetriaminepenta (methylene phosphonic acid) and its hexasodium salt. Among the commercial phosphonate materials, preferred is 1-hydroxyethylidene-1,1-diphosphonic acid, available as DEQUEST 2010 and diethylenediamine penta (methylene phosphonic) acid, commercially as REQUEST 2060S, both available from Solutia, Inc. in 60% strength.

In general, the phosphonic acids are more preferred over the salt derivatives. Thus, in formula (III) above, both R4 and R5 are more desirably -H versus the stated salt derivatives. Also preferred are those phosphonic acid salts which generate the corresponding phosphonic acid in-situ in the presence of a slight amount of strong acid, such as HCl.

The amount of phosphonate in the well treatment composition is generally between from about 0.1 to about 10, preferably from about 0.25 to about 6, more preferably from about 0.5 to about 3, percent by volume based on the total volume of water, phosphonate and hydrofluoric acid source.

The organosilanes for use herein contain a Si-C bond and includes polysiloxanes.

Among the organosilane especially suitable for use in this invention are those organosilane halides of the formula: 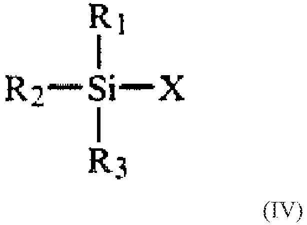 wherein X is a halogen, R₁ is an organic radical having from 1 to 50 carbon atoms, and R₂ and R₃ are the same or different halogens as X or organic radicals of R₁. Preferably, X is a halogen selected from the group consisting of chlorine, bromine and iodine with chlorine being preferred, R₁ is an alkyl, alkenyl, alkoxide or aryl group having from 1 to 18 carbon atoms and R₂ and R₃ are the same or different halogens, or alkyl, alkenyl, alkoxide or aryl group having from 1 to 18 carbon atoms.

Suitable specific organosilane halides include methyldiethylchlorosilane, dimethyldichlorosilane, methyltrichlorosilane, dimethyldibromosilane, diethyldiiodosilane, dipropyldichlorosilane, dipropyldibromosilane, butyltrichlorosilane, phenyltribromosilane, diphenyldichlorosilane, tolyltribromosilane, methylphenyldichlorosilane, propyldimethoxychlorosilane and the like as well as organosilane alkoxides and amino silanes.

Among the organosilane alkoxides suitable for use in this invention are those having the formula: 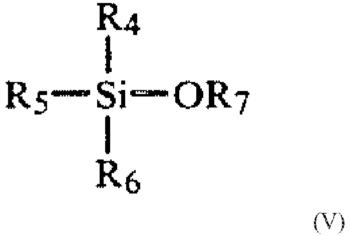 wherein R₄, R₅, and R₆ are independently selected from hydrogen and organic radicals having from 1 to 50 carbon atoms, provided not all of R₄, R₅, and R₆ are hydrogen, and R₇ is an organic radical having from 1 to 50 carbon atoms. Preferably, R₄, R₅, and R₆ are independently selected from hydrogen, amine, alkyl, alkenyl, aryl, and carbhydryloxy groups having from 1 to 18 carbon atoms, with at least one of the R₄, R₅, and R₆ groups not being hydrogen, and R₇ is selected from amine, alkyl, alkenyl, and aryl groups having from 1 to 18 carbon atoms. When R₄, R₅, and R₆ are carbhydryloxy groups, alkoxy groups are preferred.

In another embodiment, the organosilane may be of the formula:

R-Si(OR')₃ (VI)

wherein in one embodiment R is branched or linear aliphatic carbon chain that may be saturated or unsaturated (e.g., containing one or more double and/or triple bonds), and which may have from about 1 to about 10 carbon atoms, alternatively from about I to about 5 carbon atoms, and further alternatively about 3 carbon atoms; and wherein each R' is independently branched or linear carbon chain that may be saturated or unsaturated (e.g., containing one or more double and/or triple bonds), and which may have from about 1 to about 4 carbon atoms, alternatively from about I to about 2 carbon atoms, and further alternatively about 2 carbon atoms; it being understood that each R' group may be the same or different structure than one or both of the other R' groups. In another embodiment, R may be further characterized as alkanyl or alkenyl carbon chain having the above-properties. In other embodiments, R may be characterized as an aromatic carbon chain or alicyclic carbon chain.

In a further embodiment, one or more of the carbon chains R and/or R' may be optionally and independently derivatized, e.g., the R carbon chain and/or one or more of the R' carbon chains may each contain one or more amino functional groups, one or more halogen groups (e.g., tetrachlorosilane, methyltrichlorosilane, etc.), two or more isocyanate functional groups, two or more epoxy groups, etc.

In one exemplary embodiment, a silane may include an amino-functional silane-based compound such as aminoalkyl siloxanes like gamma-aminopropyltriethoxy silane, a isocyanate-functional silane-based compound such as gamma isocyanatopropyltriethoxy silane and mixtures thereof.

Specific examples of commercially available silane-based products available from liquid isobuytlisopropyldimethoxysilane, liquid diisopropylmethoxysilane, liquid diisobutyldimethoxysilane, liquid dicyclopentyldimethoxysilane, gammaaminopropyltriethoxysilane epoxy functional silanes.

In another embodiment, the silane may include one or more siloxane-based compounds having the following chemical formula:

R-Si(OR')₂-O-Si(OR")₂-R (VII)

wherein in one embodiment R is a branched or linear aliphatic carbon chain that may be saturated or unsaturated (e.g., containing one or more double and/or triple bonds), and which may have from about 1 to about 10 carbon atoms, alternatively from about 1 to about 5 carbon atoms, and further alternatively about 3 carbon atoms; wherein each R' and each R" is independently a branched or linear carbon chain that may be saturated or unsaturated (e.g., containing one or more double and/or triple bonds), and which may have from about 1 to about 4 carbon atoms, alternatively from about 1 to about 2 carbon atoms, and further alternatively about 2 carbon atoms; it being understood that one R' may be the same or different than the other R' group, that one R" may be the same or different than the other R" group, and that one or both R' groups may be the same or different than one or both R" groups. In another embodiment, R may be further characterized as alkanyl or alkenyl carbon chain having the above-properties. In other embodiments, R may be characterized as an aromatic carbon chain or alicyclic carbon chain. In a further embodiment, one or more of the carbon chains R and/or R' may be optionally and independently derivatized, e.g., the R carbon chain and/or one or more of the R' and/or R" carbon chains may each contain one or more amino functional groups, two or more isocyanate functional groups, two or more epoxy groups, etc.

Specific examples of siloxane-based compounds include, but are not limited to, an aqueous solution of aminoalkyl siloxane available from Baker Hughes Incorporated as FSA-1.

Further, suitable specific organosilane alkoxides and amino silanes include methyltriethoxysilane, dimethyldiethoxysilane, methyltrimethoxysilane, divinyldimethoxysilane, divinyldi-2-methoxyethoxy silane, di(3-glycidoxypropyl) dimethoxysilane, vinyltriethoxysilane, vinyltris-2-methoxyethoxysilane, 3-glycidoxypropyltrimethoxysilane, 3-methacryloxypropyltrimethoxysilane, 2-(3,4-epoxycyclohexyl) ethyltrimethoxysilane, N-2-aminoethyl-3-propylmethyldimethoxysilane, N-2-aminoethyl-3-propyltrimethoxysilane, N-2-aminoethyl-3-aminopropyltrimethoxysilane, 3-aminopropyltriethoxysilane, tetraethoxysilane and the like.

Generally, the amount of organosilane in the aqueous well treatment composition is between from about 0.01 to about 10 percent, preferably from about 0.1 to about 5 percent, by volume based on the total volume amount of the well treatment composition. The amount of the ammonium salt in the aqueous well treatment composition is between from about 0.01 to about 10 percent, preferably from about 0.1 to about 5 percent by volume based on the total volume amount of the well treatment composition. In a preferred embodiment, the volumetric ratio of the organosilane to quaternary ammonium salt is between from about 0.001 to about 1000, most preferably from about 0.02 to about 50.

The ammonium salt is preferably a quaternary ammonium salt represented by the formula:

N(R⁶)(R⁷)(R⁸)(R⁹)Y⁻ (VIII)

wherein R⁶, R⁷, R⁸ and R⁹ are independently hydrogen, a C₁-C₂₀ alkyl group (preferably a C₁-C₆ alkyl group), a hydroxyalkyl group wherein the alkyl group is preferably a C₁-C₁₀ alkyl and more preferably a C₁-C₆ alkyl or a radical of the structure: 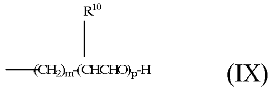 wherein m is from 0 to about 10, p is form 1 to about 5, R¹⁰ is hydrogen or methyl, provided that (i) the total number of carbons in the radical of formula (IX) do not exceed 20 and not all of R⁶, R⁷, R⁸ and R⁹ are hydrogen. In one embodiment, each R⁶, R⁷ and R⁸ is a hydroxyalkyl, such as 2-hydroxyethyl, and R⁹ is an alkyl group, such as methyl. In another embodiment, each of R⁶, R⁷ and R⁸ are alkyl and R⁹ is a hydroxyalkyl, such as 2-hydroxyethyl. In another preferred embodiment, each of R⁶, R⁷, R⁸ and R⁹ are an alkyl group. The anion, Y⁻, is a salt, preferably a halide, X, perchlorate, thiocyanate, cyanate, a C₁-C₆ carboxylate, an alkyl sulfate, methanesulfonate, BX₄⁻, PF₆⁻, AsF₆⁻, SbF₆⁻, NO₂⁻, NO₃⁻ or SO₄⁻. In a preferred embodiment, X is a halide, such as chloride. Such salts are set forth in U.S. Patent No. 5,342,530.

Further, acceptable salts include polycationic polymers having a molecular weight up to about 300,000, for instance from 50,000 to 300,000 and having the repeating units represented by the formulae: 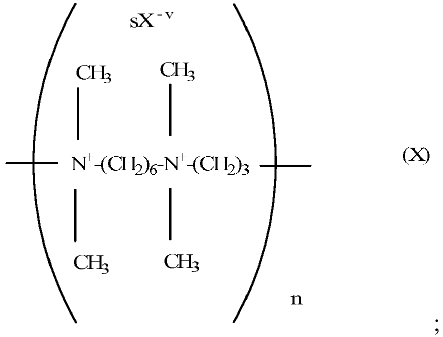 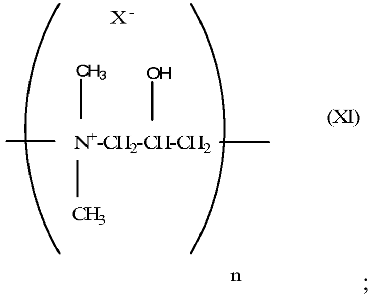 and 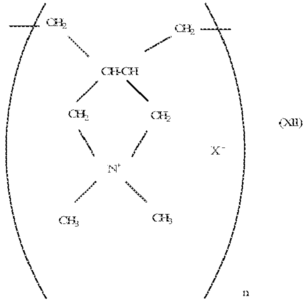 as well as compounds of the formula: 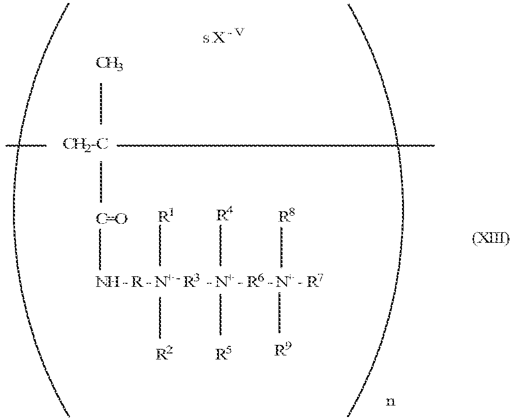 wherein R and R³ are independently selected from the group consisting of an alkylene group having from about 2 to about 4 carbon atoms; R¹, R², R⁴, R⁵, R⁷, R⁸, and R⁹ are independently selected from the group consisting of methyl and ethyl; R⁶ is selected from the group consisting of an unsubstituted alkylene group having from about 2 to 4 carbon atoms and a substituted alkylene group having from about 2 to about 4 carbon atoms and containing a hydroxy group; X is an anion selected from the group consisting of a halogen, methyl sulfate, sulfate, and nitrate; v represents the valency of the anion represented by X; and, s is an integer equal to the number of said anions required to maintain electronic neutrality. In a preferred embodiment, R and R³ are preferably independently selected from the group consisting of ethylene, trimethylene, tetramethylene, and 2-methyltrimethylene; R⁶ is preferably selected from the group consisting of 2-hydroxytrimethylene, 2-hydroxytetramethylene, and 3-hydroxytetramethlene; R¹ and R² are preferably methyl; R⁴ and R⁵ are preferably ethyl; R⁷, R⁸ and R⁹ are preferably methyl; and X is preferably selected from the group consisting of a halogen such as chloride, bromide, and iodide, methyl sulfate and sulfate, most preferably halogen. Preferred are those compounds of the formula: 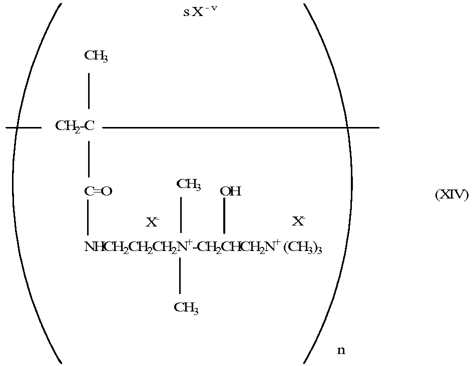 Such polycationic ammonium salts are disclosed in U.S. Patent Nos. 4,447,342 and 4,536,305.

In a preferred embodiment, the ammonium salt is a quaternary ammonium salt like choline chloride and preferably contains the N,N,N-trimethylethanolammonium cation. Such quaternary ammonium salts include Claytreat-3C clay stabilizer (CT-3C) or Claymaster-5C both by Baker Hughes Inc.

The pH of the well treatment composition is typically maintained at a range of 0 to about 3.0. Enough acid should be used to maintain the pH of the aqueous HF solution and to hydrolyze ammonium fluoride or bifluoride, if it is used. Maintenance of the desired pH range aids in the inhibition of inorganic scales and in most instances the prevention of formation of such scales. In addition, maintenance of the pH range maximizes the effect of the organosilane and the quaternary ammonium salt on the inhibition and control of fines and swellable clay.

Other materials commonly added to acid treatment solutions may also optionally be added to the well treatment composition herein. For example, the composition may include or have added thereto corrosion inhibitors, surfactants, iron control agents, non-emulsifiers, foaming agents, water-wetting surfactants, anti-sludge agents, mutual solvents or alcohols (such as methanol or isopropanol), gelling agents, bactericides, or fluid loss control agents. The amount of such additives, when employed, is typically between from about 0.1 to about 2 weight percent. When mutual solvents or alcohols are employed, they are typically used in amounts between from about 1 to about 20 weight percent of the well treatment composition.

The well treatment composition is introduced into the formation at the location where treatment is desired. The well treatment composition may be applied after treatment of the formation with a pre-flush.

The well treatment composition of the invention enhances the production of hydrocarbons from hydrocarbon bearing calcareous or siliceous formations. The treatment method is especially effective if applied prior to gravel packing or fracturing.

The well treatment composition may easily be applied in the stimulation of Sandstone formations containing calcareous materials and calcareous formations such as carbonate or dolomite. In addition to its use in matrix acidizing, it may be used in acid fracturing as well as pre-fracturing treatment on sandstone, carbonate and dolomite formations. They may also be used for remedial workovers of wells to keep silicates in suspension and to remove clay, fine and sand deposits as well as inorganic scales from downhole screens and from drilling fluid damage. The well treatment composition is capable of dissolving carbonates, as well as siliceous minerals, while minimizing the formation of calcium fluoride and magnesium fluoride or sodium or potassium fluorosilicate or fluoroaluminate.

Such well treatments may be simplified by use of the well treatment composition defined herein since the need to pump multiple fluids in a carefully choreographed sequence is eliminated. Further, acid placement and distribution is improved and equipment requirements are reduced, e.g., in terms of tankage, etc. Use of the well treatment composition improves logistics, reduces costs, along with improved results, while simultaneously rendering treatments which are easier to implement and control at the field level.

The well treatment composition may further be employed in the remediation of oil and gas and geothermal wells by preventing and/or inhibiting the formation of unwanted deposits on the surfaces of the wellbore, downhole assembly, sand control screens, production equipment and pipelines. Such unwanted deposits form and/or accumulate in the wellbore, production equipment, recovery equipment and well casing. Such accumulated deposits affect productivity and are typically removed prior to cementing or the introduction of completion fluids into the wellbore. Remediation treatment fluids are further typically used to remove such undesired deposits prior to the introduction of stimulation fluids or to restore well productivity from the undesired deposits. In a preferred embodiment, the invention is used to remove siliceous or calcareous deposits inside well tubulars. The well treatment composition may also be used to treat pipelines from undesired deposits.

In well remediation applications, the well treatment composition is preferably injected directly into the wellbore through the production tubing or through the use of coiled tubing or similar delivery mechanisms. Once downhole, the composition remedies damage caused during well treating such as, for instance, by stimulation fluids and drilling fluid muds, by dispersing and removing siliceous materials from the formation and wellbore.

The following examples are illustrative of some of the embodiments of the present invention. Other embodiments within the scope of the claims herein will be apparent to one skilled in the art from consideration of the description set forth herein. It is intended that the specification, together with the examples, be considered exemplary only, with the scope of the invention being indicated by the claims which follow.

All percentages set forth in the Examples are given in terms of volume percent except as may otherwise be indicated.

### EXAMPLES

### Examples 1-6.

Analytical grade carbonate powder was exposed to an aqueous hydrofluoric acid solution at 70°F (21.1°C). The un-dissolved solid or precipitate was analyzed by X-ray diffraction technique (XRD). Table 1 presents the results of these tests wherein pH A represents the pH at the beginning of the testing and pH B represents the pH at the end of the testing.

**Table 1**

| **Ex. No.** | **Composition** | **pH A** | **pH B** | **CaCO₃ added** | **Comments** |
|---|---|---|---|---|---|
| Comp. Ex. 1 | HF acid | 2.2 | 2.2 | 0.4g/100cc | All carbonate dissolved and CaF₂ precipitate formed within 5 minutes. |
| Comp. Ex. 2 | HF acid | 1.9 | 1.9 | 0.4g/100cc | All carbonate dissolved and CaF₂ precipitate formed within 5 minutes. |
| | 3% Dequest 2010 | | | | |
| Comp. Ex. 3 | HF acid | 2.2 | >4.0 | 0.4g/100cc | All carbonate dissolved and CaF₂ precipitate formed within 5 minutes. |
| | 2.8g/100cc Boric acid | | | | |
| 4 | HF acid | 1.6 | 1.6 | 0.4g/100cc | All carbonate dissolved and no precipitate formed over 4 hours. |
| | 3% Dequest 2010 | | | | |
| | 2.8g/100ccBoric acid | | | | |
| 5 | HF acid | 1.6 | 1.6 | 1.0g/100cc | All carbonate dissolved and no precipitate formed over 24 hours. |
| | 3% Dequest 2060S | | | | |
| | 4.2g/100cc Boric acid | | | | |
| 6 | HF acid | 1.6 | 1.6 | 1.0g/100cc | All carbonate dissolved and no precipitate formed over 24 hours. |
| | 1.5% Dequest 2010 | | | | |
| | 1.5% Dequest 2060S | | | | |
| | 4.2g/100cc Boric acid | | | | |

### Example 7.

The dissolution effect of the compositions of Examples 1-6 was illustrated on a formation containing calcareous minerals as follows. A composition consisting of 75 wt. % quartz, 5 wt. % kaolinite, 10 wt. % potassium-feldspar and 10 wt. % calcium carbonate (powder) was prepared. The composition was tested for its solubility in a HF acid at 150°F (65.6°C) over 4 and 24 hrs. After solubility testing, the un-dissolved solid or precipitate was analyzed. The experimental conditions and results are set forth in Tables 2-5. Table 2 represents the 4 hour solubility testing of the formation composition at 150° F (65.6°C). Tables 3-5 represent the 4 and 24 hour solubility testing of the formation composition at 150° F (65.6°C).

**Table 2**

| **Acid** | **HF acid** | **HF acid** | **HF acid** | **HF acid** | **HF acid** |
|---|---|---|---|---|---|
| | **3% Dequest 2010** | **2.8g/100cc Boric acid** | **3% Dequest 2010** | **3% Dequest 2060S** | **3% Dequest 2060S** |
| | | | **2.8g/100cc Boric acid** | | **2.8g/100ccBori c acid** |
| pH before/after | 1.9/1.9 | 2.2/5.5 | 1.6/1.9 | 1.6/1.6 | 1.0/1.3 |
| Solubility, % | 14.9 | 4.4 | 14.4 | 14.7 | 9.6 |
| Quartz | 87 | 79 | 91 | 89 | 88 |
| Plagioclase | nd | 1 | 1 | nd | 1 |
| K-feldspar | 4 | 7 | 6 | 2 | 6 |
| Kaolinite | nd | 2 | nd | nd | 2 |
| Calcite | 1 | 1 | 1 | tr | 1 |
| CaF₂ | 7 | 9 | <0.5 | 8 | 1 |
| K₂SiF₆ | tr | nd | nd | nd | nd |

| | | | | | |
|---|---|---|---|---|---|
| Notes: nd-not detected and tr-trace. | | | | | |

**Table 3**

| **Acid** | **HF acid** | | **HF acid** | |
|---|---|---|---|---|
| | **7.5% Dequest 2010** | | **7.5% Dequest 2010** | |
| | **22.5% Dequest 2060S** | | **22.5% Dequest 2060S** | |
| | | | **2.8g/100cc Boric acid** | |
| Time, Hrs | 4 | 24 | 4 | 24 |
| pH before/after | 1.6/1.6 | 1.6/1.6 | 1.3/1.6 | 1.3/1.6 |
| Solubility, % | 13.4 | 20.8 | 11.9 | 12.2 |
| Quartz | 89 | 91 | 90 | 91 |
| Plagioclase | nd | nd | 1 | 1 |
| K-feldspar | 3 | nd | 6 | 6 |
| Kaolinite | nd | nd | 1 | nd |
| Calcite | tr | nd | 1 | 1 |
| CaF₂ | 7 | 8 | nd | nd |
| K₂SiF₆ | tr | tr | nd | nd |

| | | | | |
|---|---|---|---|---|
| Notes: nd-not detected and tr-trace. | | | | |

**Table 4**

| **Acid** | **HF acid** | | **HF acid** | |
|---|---|---|---|---|
| | **1.5% Dequest 2010** | | **1.5% Dequest 2010** | |
| | **1.5% Dequest 2060S** | | **1.5% Dequest 2060S** | |
| | | | **2.8g/100cc Boric acid** | |
| Time, Hrs | 4 | 24 | 4 | 24 |
| pH before/after | 1.9/1.6 | 1.9/1.6 | 1.3/1.6 | 1.3/1.6 |
| Solubility, % | 13.8 | 24.6 | 12.0 | 15.4 |
| Quartz | 90 | 90 | 90 | 92 |
| Plagioclase | nd | nd | 1 | tr |
| K-feldspar | 2 | nd | 6 | 6 |
| Kaolinite | nd | nd | 1 | nd |
| Calcite | tr | nd | tr | tr |
| CaF₂ | 7 | 9 | 1 | 1 |
| K₂SiF₆ | tr | tr | nd | nd |

| | | | | |
|---|---|---|---|---|
| Notes: nd-not detected and tr-trace. | | | | |

**Table 5**

| **Acid** | **HF acid** | | **3% HF** | |
|---|---|---|---|---|
| | **22.5% Dequest 2010** | | **22.5% Dequest 2010** | |
| | **7.5% Dequest 2060S** | | **7.5% Dequest 2060S** | |
| | | | **2.8g/100cc Boric acid** | |
| Time, Hrs | 4 | 24 | 4 | 24 |
| pH before/after | 1.6/1.6 | 1.6/1.6 | 1.3/1.6 | 1.3/1.6 |
| Solubility, % | 13.9 | 22.8 | 12.1 | 15.3 |
| Quartz | 89 | 89 | 90 | 90 |
| Plagioclase | nd | Nd | 1 | 1 |
| K-feldspar | 2 | Tr | 5 | 5 |
| Kaolinite | nd | Nd | tr | nd |
| Calcite | tr | Nd | 1 | 1 |
| CaF₂ | 8 | 10 | 2 | 2 |
| K₂SiF₆ | tr | Tr | nd | nd |

| | | | | |
|---|---|---|---|---|
| Notes: nd-not detected and tr-trace. | | | | |

Tables 2-5 demonstrate that the well treatment compositions defined herein can control or minimize the formation of inorganic fluoride scales, such as calcium fluoride, in the hydrofluoric acid.

### Example 8.

A coreflood study was conducted using a Bandera Sandstone core at 180°F. The composition of Bandera Sandstone is set forth in Table 6:

**Table 6**

| **Mineral Composition** | **Wt%** |
|---|---|
| Quartz | 61 |
| Feldspar | 15 |
| Dolomite | 5 |
| Illite | 12 |
| Kaolinite | 4 |
| Chlorite | 2 |

Table 7 shows the composition of acids systems used in the coreflood experiment wherein HV represents an organophosphonate.

**Table 7**

| | **Pre-Flush acid System** | **Main acid system** | **Post-Flush acid system** |
|---|---|---|---|
| HF, wt% | - | 3 | - |
| HCl, wt% | 10 | 2 | 10 |
| HV, gpt | - | 60 (227 L per 3,785 L) | - |
| Iron control agent, gpt | - | 10 (37.9 L per 3,785 L) | - |
| Corrosion inhibitor, gpt | 2 (7.57 L per 3,785 L) | 2 (7.57 L per 3,785 L) | 2 (7.57 L per 3,785 L) |
| Acetic acid, wt% | - | 3 | - |
| Boric Acid, ppt | - | 60 | - |

Five fluid stages were injected in the following sequence:
1. 5 wt% NH₄Cl solution to measure initial core permeability.
2. 4 pore volumes (PV) of Pre-Flush acid system.
3. 4 PV of Main acid system.
4. 4 PV of Post-Flush acid system.
5. 5 wt% NH₄Cl solution to measure initial core permeability.
The results of two coreflood experiments are shown in Table 8. All acid solutions injected in the second experiment contained the combination of 3 gpt (11.4 L per 3,785 L) of a quaternary ammonium salt, commercially available as Claymaster-5C from Baker Hughes Inc., and 5 gpt (18.9 L per 3,785 L) of an aminoalkyl siloxane, commercially available as FSA-1 from Baker Hughes Inc. while in the first experiment none of the acid solutions contained Claymaster-5C and FSA-1. A significant increase in permeability was observed when the acid solution was prepared with the addition of Claymaster-5C and FSA-1.

**Table 8**

| **No.** | **Measure initial permeability with** | **Acid system** | | | **Measure final permeability with** | **Permeability enhancement, %** |
|---|---|---|---|---|---|---|
| | | **Pre-flush** | **Main** | **Post-flush** | | |
| A | 5 wt% NH₄Cl | 0 gpt of Claymaster-5C, 0 gpt of FSA-1 | | | 5 wt% NH₄Cl | -10.9 |
| B | 5 wt% NH₄Cl | 3 gpt (11.4 L per 3,785 L) of Claymaster-5C, | | | 5 wt% NH₄Cl | 42 |
| | | 5 gpt (18.9 L per 3,785 L) of FSA-1 | | | | |

Test A. The pressure drop across the core is a function of cumulative injected pore volumes during the five fluid stage injections. Initially a NH₄Cl solution was injected at a rate of 5 ml/min for 1 PV then reduced to 2 ml/min to calculate an accurate average value of initial permeability. All acid stages were injected at a rate of 2 ml/min and did not contain the combination of Claymaster-5C and FSA-1. An increase in the pressure drop across the core during the injection of the pre-flushed stage (which mainly 10 wt% HCl) was observed. Also, during the injection of main acid the pressure drop across the core initially decreased then increased again as evidence of damage occurring during the main acid injection. At the end of the experiment NH₄Cl solution was injected at a rate of 2 ml/min and then increased to 5 ml/min to calculate an accurate average value of final permeability. A -10.9 % permeability enhancement was observed
Test B. Initially a NH₄Cl solution was injected at a rate of 5 ml/min then reduced to 2 ml/min to calculate an accurate average value of initial permeability. All acid stages were injected at a rate of 2 ml/min and contained the combination of 3 gpt (11.4 L per 3,785 L) of Claymaster-5C and 5 gpt (18.9 L per 3,785 L) of FSA-1. An increase in the pressure drop across the core during the injection of the pre-flushed stage (mainly 10 wt% HCl) was observed. However, no increase in pressure drop was observed across the core during the injection of main acid. This illustrates that the combination of Claymaster-5C and FSA-1 enhanced the permeability of the core during main acid injection. Finally, a NH₄Cl solution was injected at a rate of 2 ml/min and then increased to 5 ml/min to calculate an accurate average value of final permeability. A 42% permeability enhancement was observed.

### Example 9.

A coreflood study was conducted using a Bandera Sandstone core at 180°F (82.2°C). wherein the Bandera Sandstone had the composition illustrated in Table 6 above. Table 9 sets forth the composition of the acid system:

**Table 9**

| | **Pre-Flush acid System** | **Main acid system** | **Post-Flush acid system** |
|---|---|---|---|
| HF, wt% | - | 3 | - |
| HCl, wt% | 15 | 1 | 15 |
| HV, gpt | - | 30 (114 L per 3,785 L) | - |
| Iron control agent, gpt | - | 10 (37.9 L per 3,785 L) | - |
| Corrosion inhibitor, gpt | 2 (7.57 L per 3,785 L) | 2 (7.57 L per 3,785 L) | 2 (7.57 L per 3,785 L) |
| Acetic acid, wt% | - | - | - |
| Boric Acid, ppt | - | - | - |

Five fluid stages were injected in the following sequence:
1. 5 wt% NH₄Cl solution to measure initial core permeability.
2. 6 PV of Pre-Flush acid system.
3. 12 PV of Main acid system.
4. 6 PV of Post-Flush acid system.
5. 5 wt% NH₄Cl solution to measure initial core permeability.
The results of a coreflood experiment are shown in Table 10.

**Table 10**

| **Measure initial permeability with** | **Acid system** | | | **Measure final permeability with** | **Permeability enhancement, %** |
|---|---|---|---|---|---|
| | **Pre-flush** | **Main** | **Post-flush** | | |
| 5 wt% NH₄Cl | 3 gpt (11.4 L per 3,785 L) of Claymaster-5C, | | | 5 wt% NH₄Cl | 95 |
| | 5 gpt (18.9 L per 3,785 L) of FSA-1 | | | | |

The main acid used had less amount of phosphonate acid, no boric acid and no acetic acid, as shown in Table 10. However, all acid systems contained the combination of Claymaster-5C (3 gpt; 11.4 L per 3,785 L) and FSA-1 (5 gpt; 18.9 L per 3,785 L). A 95% increase in core permeability was observed.

The pressure drop across the core was a function of cumulative injected pore volume during the five fluid stage injections. Initially a NH₄Cl solution was injected at a rate of 5 ml/min then reduced to 2 ml/min to calculate an accurate average value of initial permeability. All acid stages, set forth in Table 9, were injected at a rate of 2 ml/min and contained the combination of 3 gpt (11.4 L per 3,785 L) of Claymaster-5C and 5 gpt (18.9 L per 3,785 L) of FSA-1. An increase in the pressure drop across the core during the injection of the pre-flush stage, principally 15 wt% HCl, was observed. Also, no increase in pressure drop across the core was observed during the injection of the main acid which had less amount of phosphonate acid, no boric acid and no acetic acid. This illustrates that the combination of Claymaster-5C and FSA-1 enhanced the permeability of the core during the main acid injection. Finally, a NH₄Cl solution was injected at rate of 2 ml/min then increased to 5 ml/min to calculate an accurate average value of final permeability. A 95% permeability enhancement was observed.

### Example 10.

A coreflood study was conducted using Bandera Sandstone core at 180°F, wherein the Bandera Sandstone had the composition illustrated in Table 6. The composition of the acid system is set forth in Table 11:

**Table 11**

| | **Main acid system** |
|---|---|
| HF, wt% | 2.6 |
| HCl, wt% | 6 |
| HV, gpt | 53 (201 L per 3,785 L) |
| Iron control agent, gpt | 10 (37.9 L per 3,785 L) |
| Corrosion inhibitor, gpt | 2 (7.57 L per 3,785 L) |
| Acetic acid, wt% | 2.6 |
| Boric Acid, ppt | 53 |

Three fluid stages were injected in the following sequence:
1. 5 wt% NH₄Cl solution to measure initial core permeability.
2. 16 PV of main acid system.
4. 5 wt% NH₄Cl solution to measure initial core permeability.
No pre-flush or post-flush acid stages were injected. The main acid used contained the combination of Claymaster-5C (3 gpt; 11.4 L per 3,785 L) and FSA-1 (5 gpt; 18.9 L per 3,785 L). A 86% increase in core permeability was observed as illustrated in Table 12.

**Table 12**

| **Measure initial permeability with** | **Main Acid system (no Pre-Flush stage acid and no Post-flush stage acid)** | **Measure final permeability with** | **Permeability enhancement, %** |
|---|---|---|---|
| 5 wt% NH₄Cl | 3 gpt (11.4 L per 3,785 L) of Clay master-5C, 5 gpt (18.9 L per 3,785 L) of FSA-1 | 5 wt% NH₄Cl | 86 |

### Example 11.

A coreflood study was conducted using Berea Sandstone core at 180°F having the composition set forth in Table 13:

**Table 13**

| **Mineral Composition** | **Wt%** |
|---|---|
| Quartz | 87 |
| Feldspar | 3 |
| Dolomite | 1 |
| Calcite | 2 |
| Illite | 1 |
| Kaolinite | 5 |
| Chlorite | 2 |

The acid system is set forth in Table 11. Three fluid stages were injected in the following sequence:
1. 5 wt% NH₄Cl solution to measure initial core permeability.
2. 4 PV of Main acid system.
3. 5 wt% NH₄Cl solution to measure initial core permeability.
No pre-flush or post-flush acid stages were injected. The main acid contained the combination of Claymaster-5C (3 gpt; 11.4 L per 3,785 L) and FSA-1 (5 gpt; 18.9 L per 3,785 L). A 82% increase in core permeability was observed as set forth in Table 14.

**Table 14**

| **Measure initial permeability with** | **Main Acid system (no Pre-Flush stage acid and no Post-flush stage acid)** | **Measure final permeability with** | **Permeability enhancement, %** |
|---|---|---|---|
| 5 wt% NH₄Cl | 3 gpt (11.4 L per 3,785 L) of Claymaster-5C, 5 gpt (18.9 L per 3,785 L) of FSA-1 | 5 wt% NH₄Cl | 82 |

From the foregoing, it will be observed that numerous variations and modifications may be effected without departing from the scope of the novel concepts of the invention.

## Claims

1. A method for enhancing the productivity of a hydrocarbon-bearing calcareous or siliceous formation comprising:
(A) pumping into the wellbore penetrating the formation a well treatment composition comprising:
a) a phosphonate acid, ester or salt thereof, wherein the phosphonate is of the formula: 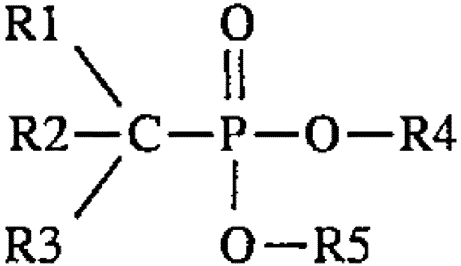 wherein R1, R2 and R3 are independently selected from hydrogen, alkyl, aryl, phosphonic, phosphonate, phosphate, aminophosphonic acid, aminophosphonate, acyl, amine, hydroxy and carboxyl groups and R4 and R5 are independently selected from hydrogen, sodium, potassium, ammonium or an organic radical;
(b) a hydrofluoric acid source;
(c) a quaternary ammonium salt; and
(d) an organosilane; and
(B) preventing the formation or inhibiting the formation of inorganic fluoride scales in the wellbore and/or formation.

2. The method of claim 1, wherein the pH of the well treatment composition is between from about 0 to about 3.

3. The method of claim 1, wherein the amount of quaternary ammonium salt in the aqueous well treating composition is between from about 0.01 to about 10 percent by volume based on the total volume of the well treatment composition.

4. The method of claim 1, wherein the amount of the organosilane in the well treatment composition is between from about 0.01 to about 10 percent by volume based on the total volume of the well treatment composition.

5. The method of claim 1, wherein the inorganic or siliceous scales are selected from the group consisting of calcium fluoride, magnesium fluoride, sodium fluorosilicate, potassium fluorosilicate and fluoroaluminate.

6. The method of claim 1, wherein the amount of phosphonate acid, ester or salt thereof in the aqueous well treating composition is between from about 0.1 to about 10 percent by volume based on the total volume of (a) and (b) and water.

7. The method of claim 1, wherein the aqueous well treating composition further comprises a boron containing compound selected from the group consisting of (i.) fluoroboric acid and/or (ii.) boron compounds capable of forming a BF₄⁻ complex when exposed to F₄⁻ or a hydrofluoric acid source and further comprising forming a BF₄⁻ complex, preferably wherein either:
(a) the boron containing compound is of the formula R₆R₇R₈BO₃ wherein each of R₆, R₇ and R₈ are independently hydrogen or a unsubstituted or substituted alkyl or alkylene group; or
(b) the boron containing compound is of the formula: 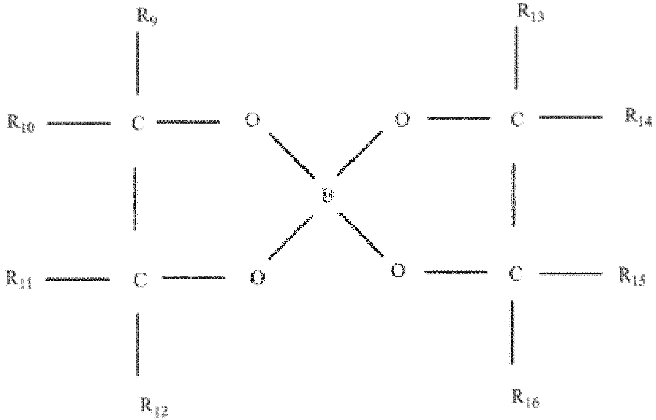 wherein each of R₉, R₁₀, R₁₁, R₁₂, R₁₃, R₁₄, R₁₅ and R₁₆ is independently selected from hydrogen or a substituted or unsubstituted alkyl or alkenyl group; or
c) the amount of boron containing compound in the aqueous well treatment composition is that sufficient to render between from about 0.5 to about 10 g BF₄⁻ complex per 100 cc of (a), (b) and water.

8. The method of claim 1, wherein the aqueous well treatment composition is introduced into the wellbore during a fracturing, remedial workover or matrix acidizing operation.

9. A method of preventing and/or inhibiting the swelling of clay within a subterranean formation penetrated by a wellbore which comprises:
(A) pumping into the wellbore an aqueous well treatment composition comprising
a) a phosphonate acid, ester or salt thereof, wherein the phosphonate is of the formula: 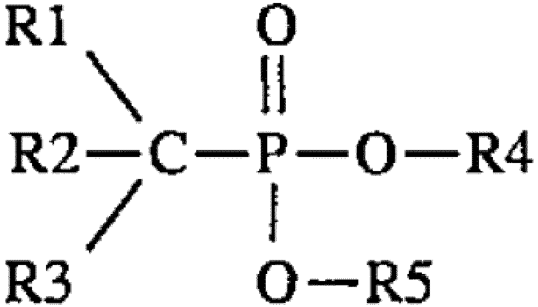 wherein R1, R2 and R3 are independently selected from hydrogen, alkyl, aryl, phosphonic, phosphonate, phosphate, aminophosphonic acid, aminophosphonate, acyl, amine, hydroxy and carboxyl groups and R4 and R5 are independently selected from hydrogen, sodium, potassium, ammonium or an organic radical;
(b) a hydrofluoric acid source;
(c) a quaternary ammonium salt; and
(d) an organosilane; and
(B) minimizing or eliminating the amount of clay swelled in the formation.

10. The method of claim 9, wherein the pH of the well treatment composition is between from about 0 to about 3, the amount of quaternary ammonium salt in the aqueous well treating composition is between from about 0.01 to about 10 percent by volume based on the total volume of the well treatment composition, and the amount of the organosilane in the well treatment composition is between from about 0.01 to about 10 percent by volume based on the total volume of the well treatment composition.

11. The method of claim 9 wherein the aqueous well treating composition further comprises a boron containing compound selected from the group consisting of (i.) fluoroboric acid and/or (ii.) boron compounds capable of forming a BF₄⁻ complex when exposed to F₄⁻ or a hydrofluoric acid source and further comprising forming a BF₄⁻ complex.

12. The method of claims 1 or 9, wherein the quaternary ammonium salt is represented by the formula:
N(R⁶)(R⁷)(R⁸)(R⁹)Y⁻
wherein R⁶, R⁷, R⁸ and R⁹ are independently a C₁-C₆ alkyl group or a hydroxyalkyl group wherein the alkyl group is preferably a C₁-C₆ alkyl; and Y⁻ is a halide, perchlorate, thiocyanate, cyanate, a C₁-C₆ carboxylase, an alkyl sulfate, methanesulfonate, BX₄⁻, PF₆⁻, AsF₆⁻, SbF₆⁻, NO₂⁻, NO₃⁻ or SO₄⁻, preferably wherein either Y is -CI, or wherein the cation of the quaternary ammonium salt is N,N,N-trimethylethanolammonium.

13. The method of claims 1 or 9, wherein the quaternary ammonium salt has repeating units selected from the group consisting of:
A. 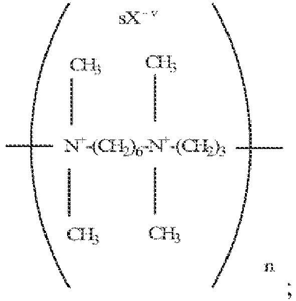
B. 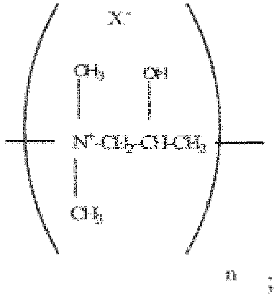
C. 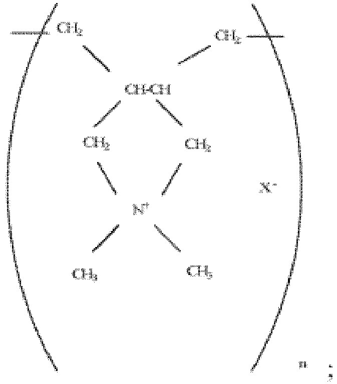 and
D. 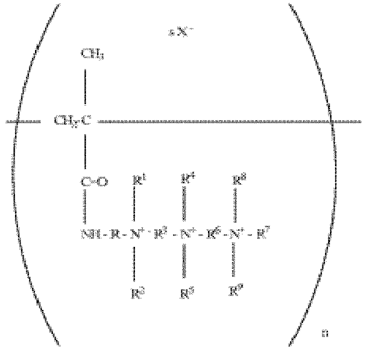
wherein R and R³ are independently selected from the group consisting of an alkylene group having from about 2 to about 4 carbon atoms; R¹, R², R⁴, R⁵, R⁷, R⁸, and R⁹ are independently selected from the group consisting of methyl and ethyl;
R⁶ is selected from the group consisting of an unsubstituted alkylene group having from about 2 to 4 carbon atoms and a substituted alkylene group having from about 2 to about 4 carbon atoms and containing a hydroxy group; X is an anion selected from the group consisting of a halogen, methyl sulfate, sulfate, and nitrate; v represents the valency of the anion represented by X; and, s is an integer equal to the number of said anions required to maintain electronic neutrality, preferably wherein the quaternary ammonium salt is of the formula:

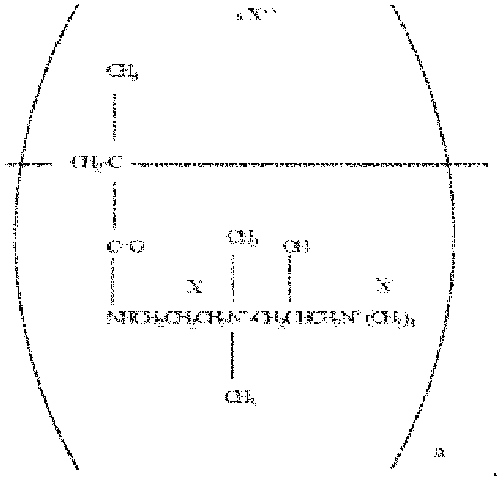

14. The method of claims 1 or 9, wherein the organosilane is at least one of the following:
(a) a silane-based compound of the formula: 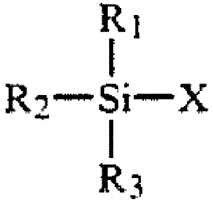 wherein X is a halogen, R₁ is an organic radical having from 1 to about 50 carbon atoms, and R₂ and R₃ are the same or different halogens or organic radicals having from 1 to about 50 carbon atoms;
(b) a silane-based compound of the formula
R-Si(OR')₃
wherein R is branched or linear aliphatic carbon chain that is saturated or unsaturated, and that has from about 1 to about 10 carbon atoms; and wherein each R' is independently branched or linear carbon chain that is saturated or unsaturated, and that has from about 1 to about 4 carbon atoms; or
(c) a siloxane-based compound of the formula:
R-Si(OR')₂-O-Si(OR")₂-R
wherein R is a branched or linear aliphatic carbon chain that is saturated or unsaturated, and that has from about 1 to about 10 carbon atoms; and wherein each R' and each R" is independently a branched or linear carbon chain that may be saturated or unsaturated and that has from about 1 to about 4 carbon atoms, preferably wherein the organosilane is an aminoalkyl siloxane.

15. A method of removing calcium fluoride, magnesium fluoride, sodium fluorosilicate, potassium fluorosilicate and/or fluoroaluminate scales from hydrocarbon-producing wellbores and minimizing or eliminating the swelling of clay within a subterranean formation penetrated by the wellbore, the method comprising:
(A) pumping into the wellbore a well treatment composition having a pH between from about 0 to about 3.0 and comprising:
a) a phosphonate acid, ester or salt thereof, wherein the phosphonate is of the formula: 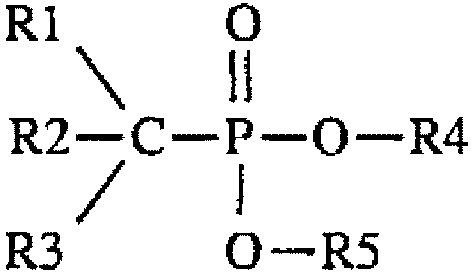 wherein R1, R2 and R3 are independently selected from hydrogen, alkyl, aryl, phosphonic, phosphonate, phosphate, aminophosphonic acid, aminophosphonate, acyl, amine, hydroxy and carboxyl groups and R4 and R5 are independently selected from hydrogen, sodium, potassium, ammonium or an organic radical;
(b) a hydrofluoric acid source;
(c) a quaternary ammonium salt of the formula:
N(R⁶)(R⁷)(R⁸)(R⁹)Y⁻
wherein R⁶, R⁷, R⁸ and R⁹ are independently a C₁-C₆ alkyl group or a hydroxyalkyl group wherein the alkyl group is preferably a C₁-C₆ alkyl; and
(d) an aminoalkyl siloxane; and
(B) removing inorganic or siliceous scales from the wellbore wherein the amount of quaternary ammonium salt and the amount of the organosilane in the well treatment composition is each between from about 0.01 to about 10 percent by volume based on the total volume of the well treatment composition, preferably wherein either the cation of the quaternary ammonium salt is N,N,N-trimethylethanolammonium, or wherein the aqueous well treating composition further comprises a boron containing compound selected from the group consisting of (i.) fluoroboric acid and/or (ii.) boron compounds capable of forming a BF₄⁻ complex when exposed to F₄⁻ or a hydrofluoric acid source and further comprising forming a BF₄⁻ complex.

## Patentansprüche

1. Verfahren zur Erhöhung der Produktivität einer kohlenwasserstoffhaltigen kalkhaltigen oder silicatischen Formation, umfassend:
(A) Pumpen einer Bohrlochbehandlungszusammensetzung in das Bohrloch, das die Formation durchdringt, umfassend:
(a) eine Phosphonatsäure, einen Ester oder ein Salz davon, wobei das Phosphonat die Formel aufweist: 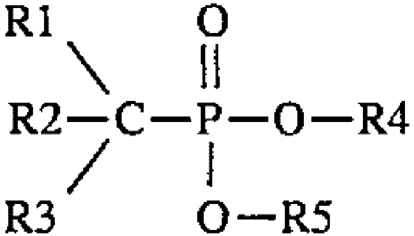 wobei R1, R2 und R3 unabhängig aus Wasserstoff, Alkyl, Aryl, Phosphon-, Phosphonat-, Phosphat-, Aminophosphonsäure, Aminophosphonat-, Acyl-, Amin-, Hydroxy- und Carboxyl-Gruppen ausgewählt sind, und R4 und R5 unabhängig aus Wasserstoff, Natrium, Kalium, Ammonium oder einem organischen Rest ausgewählt sind;
(b) eine Fluorwasserstoffsäure-Quelle;
(c) ein quaternäres Ammoniumsalz; und
(d) ein Organosilan; und
(B) Verhindern der Bildung oder Inhibieren der Bildung anorganischer Fluorid-Krusten in dem Bohrloch und/oder der Formation.

2. Verfahren nach Anspruch 1, wobei der pH der Bohrlochbehandlungszusammensetzung zwischen ungefähr 0 bis ungefähr 3 liegt.

3. Verfahren nach Anspruch 1, wobei die Menge an quaternärem Ammoniumsalz in der wässrigen Bohrlochbehandlungszusammensetzung zwischen ungefähr 0,01 bis ungefähr 10 Volumenprozent, bezogen auf das Gesamtvolumen der Bohrlochbehandlungszusammensetzung, beträgt.

4. Verfahren nach Anspruch 1, wobei die Menge des Organosilans in der Bohrlochbehandlungszusammensetzung zwischen ungefähr 0,01 bis ungefähr 10 Volumenprozent, bezogen auf das Gesamtvolumen der Bohrlochbehandlungszusammensetzung, beträgt.

5. Verfahren nach Anspruch 1, wobei die anorganischen oder silicatischen Krusten aus der Gruppe bestehend aus Calciumflourid, Magnesiumfluorid, Natriumfluorsilicat, Kaliumfluorsilicat und Fluoraluminat ausgewählt werden.

6. Verfahren nach Anspruch 1, wobei die Menge an Phosphonatsäure, Ester oder Salz davon in der wässrigen Bohrlochbehandlungszusammensetzung zwischen ungefähr 0,1 bis ungefähr 10 Volumenprozent, bezogen auf das Gesamtvolumen von (a) und (b) und Wasser, beträgt.

7. Verfahren nach Anspruch 1, wobei die wässrige Bohrlochbehandlungszusammensetzung ferner eine borhaltige Verbindung umfasst, die aus der Gruppe bestehend aus (i.) Fluorborsäure und/oder (ii.) Bor-Verbindungen, die einen BF₄⁻-Komplex bilden können, wenn sie F₄⁻ oder einer Fluorwasserstoffsäure-Quelle ausgesetzt werden, ausgewählt wird, und ferner umfassend die Bildung eines BF₄⁻-Komplexes, wobei bevorzugt entweder:
(a) die borhaltige Verbindung die Formel R₆R₇R₈BO₃ aufweist, wobei jedes von R₆, R₇ und R⁸ unabhängig Wasserstoff oder eine unsubstituierte oder substituierte Alkyl- oder Alkylen-Gruppe ist; oder
(b) die borhaltige Verbindung die Formel aufweist: 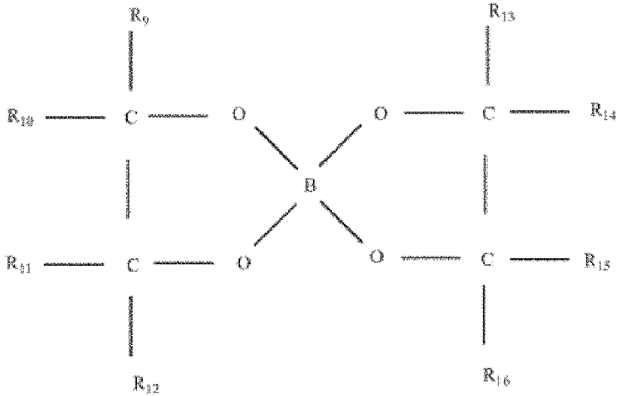 wobei jedes von R₉, R₁₀, R₁₁, R₁₂, R₁₃, R₁₄, R₁₅ und R₁₆ unabhängig aus Wasserstoff oder einer substituierten oder unsubstituierten Alkyl- oder Alkenyl-Gruppe ausgewählt ist; oder
(c) die Menge an borhaltiger Verbindung in der wässrigen Bohrlochbehandlungszusammensetzung derart ausreichend ist, dass ungefähr 0,5 bis ungefähr 10g BF₄⁻-Komplex pro 100 cc von (a), (b) und Wasser erhalten werden.

8. Verfahren nach Anspruch 1, wobei die wässrige Bohrlochbehandlungszusammensetzung in das Bohrloch während eines Brech-, Remedial Workover- oder Matrixsäuerungsvorgangs eingebracht wird.

9. Verfahren zum Verhindern und/oder Inhibieren des Quellens von Ton innerhalb einer unterirdischen Formation, die von einem Bohrloch durchdrungen wird, welches umfasst:
(A) Pumpen einer Bohrlochbehandlungszusammensetzung in das Bohrloch, umfassend:
(a) eine Phosphonatsäure, einen Ester oder ein Salz davon, wobei das Phosphonat die Formel aufweist: 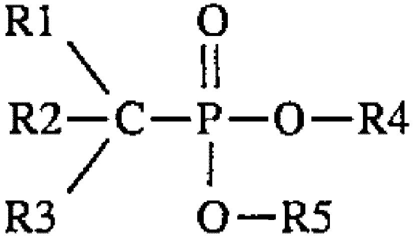 wobei R1, R2 und R3 unabhängig aus Wasserstoff, Alkyl, Aryl, Phosphon-, Phosphonat-, Phosphat-, Aminophosphonsäure, Aminophosphonat-, Acyl-, Amin-, Hydroxy- und Carboxyl-Gruppen ausgewählt sind, und R4 und R5 unabhängig aus Wasserstoff, Natrium, Kalium, Ammonium oder einem organischen Rest ausgewählt sind;
(b) eine Fluorwasserstoffsäure-Quelle;
(c) ein quaternäres Ammoniumsalz; und
(d) ein Organosilan; und
(B) Minimieren oder Eliminieren der Menge an Ton, die in der Formation aufgequollen ist.

10. Verfahren nach Anspruch 9, wobei der pH der Bohrlochbehandlungszusammensetzung zwischen ungefähr 0 bis ungefähr 3 liegt, die Menge an quaternärem Ammoniumsalz in der wässrigen Bohrlochbehandlungszusammensetzung zwischen ungefähr 0,01 bis ungefähr 10 Volumenprozent, bezogen auf das Gesamtvolumen der Bohrlochbehandlungszusammensetzung, beträgt, und die Menge des Organosilans in der Bohrlochbehandlungszusammensetzung zwischen ungefähr 0,01 bis ungefähr 10 Volumenprozent, bezogen auf das Gesamtvolumen der Bohrlochbehandlungszusammensetzung, beträgt.

11. Verfahren nach Anspruch 9, wobei die wässrige Bohrlochbehandlungszusammensetzung ferner eine borhaltige Verbindung umfasst, die aus der Gruppe bestehend aus (i.) Fluorborsäure und/oder (ii.) Bor-Verbindungen, die einen BF₄⁻-Komplex bilden können, wenn sie F₄⁻ oder einer Fluorwasserstoffsäure-Quelle ausgesetzt werden, ausgewählt wird, und ferner umfassend die Bildung eines BF₄⁻-Komplexes.

12. Verfahren nach den Ansprüche 1 oder 9, wobei das quaternäre Ammoniumsalz durch die Formel dargestellt wird:
N(R⁶)(R⁷)(R⁸)(R⁹)Y⁻
wobei R⁶, R⁷, R⁸ und R⁹ unabhängig eine C₁-C₆-Alkyl-Gruppe oder eine Hydroxyalkyl-Gruppe sind, wobei die Alkyl-Gruppe vorzugsweise ein C₁-C₆-Alkyl ist; und Y⁻ ein Halogenid, Perchlorat, Thiocyanat, Cyanat, eine C₁-C₆-Carboxylase, ein Alkylsulfat, Methansulfonat, BX₄⁻, PF₆⁻, ASF₆⁻, SbF₆⁻, NO₂⁻, NO₃⁻ oder SO₄⁻ ist, wobei Y vorzugsweise -Cl ist, oder wobei das Kation des quaternären Ammoniumsalzes N,N,N-Trimethylethanolammonium ist.

13. Verfahren nach den Ansprüchen 1 oder 9, wobei das quaternäre Ammoniumsalz Wiederholungseinheiten aufweist, die ausgewählt werden aus der Gruppe bestehend aus:
A. 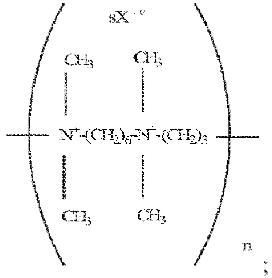
B. 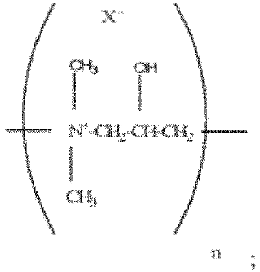
C. 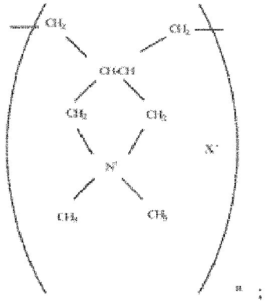 und
D. 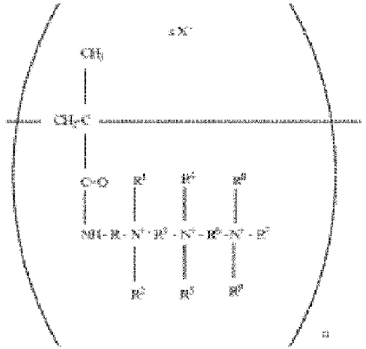
wobei R und R³ unabhängig aus der Gruppe bestehend aus einer Alkylen-Gruppe mit 2 bis ungefähr 4 Kohlenstoffatomen ausgewählt sind; R¹, R², R⁴, R⁵, R⁷, R⁸ und R⁹ unabhängig aus der Gruppe bestehend aus Methyl und Ethyl ausgewählt sind;
R⁶ aus der Gruppe bestehend aus einer unsubstituierten Alkylen-Gruppe mit ungefähr 2 bis ungefähr 4 Kohlenstoffatomen und einer substituierten Alkylen-Gruppe mit ungefähr 2 bis ungefähr 4 Kohlenstoffatomen und enthaltend eine Hydroxy-Gruppe ausgewählt ist; X ein Anion ist, das aus der Gruppe bestehend aus einem Halogen, Methylsulfat, Sulfat und Nitrat ausgewählt ist; v die Valenz des durch X dargestellten Anions repräsentiert; und s eine ganze Zahl gleich der Anzahl der Anionen ist, die notwendig sind, um eine Elektronenneutralität aufrechtzuerhalten, wobei vorzugsweise das quaternäre Ammoniumsalz die Formel aufweist:

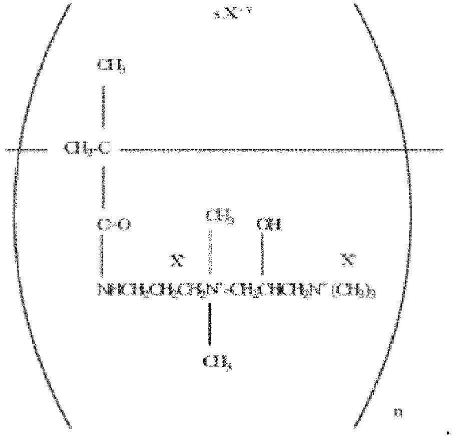

14. Verfahren nach den Ansprüchen 1 oder 9, wobei das Organosilan mindestens eines der folgenden ist:
(a) eine Verbindung auf Silan-Basis der Formel: 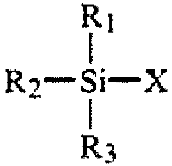 wobei X ein Halogen ist, R₁ ein organischer Rest mit 1 bis ungefähr 50 Kohlenstoffatomen ist, und R₂ und R₃ die gleichen oder verschiedene Halogene oder organische Reste mit 1 bis ungefähr 50 Kohlenstoffatomen sind;
(b) eine Verbindung auf Silan-Basis der Formel:
R-Si(OR')₃
wobei R eine verzweigte oder lineare aliphatische Kohlenstoffkette ist, die gesättigt oder ungesättigt ist, und die ungefähr 1 bis ungefähr 10 Kohlenstoffatome aufweist; und wobei jedes R' unabhängig eine verzweigte oder lineare Kohlenstoffkette ist, die gesättigt oder ungesättigt ist, und die ungefähr 1 bis ungefähr 4 Kohlenstoffatome aufweist; oder
(c) eine Verbindung auf Siloxan-Basis der Formel:
R-Si(OR')₂-O-Si(OR")₂-R
wobei R eine verzweigte oder lineare aliphatische Kohlenstoffkette ist, die gesättigt oder ungesättigt ist, und die ungefähr 1 bis ungefähr 10 Kohlenstoffatome aufweist; und wobei jedes R' und jedes R" unabhängig eine verzweigte oder lineare Kohlenstoffkette ist, die gesättigt oder ungesättigt sein kann, und die ungefähr 1 bis ungefähr 4 Kohlenstoffatome aufweist, wobei das Organosilan vorzugsweise ein Aminoalkylsiloxan ist.

15. Verfahren zur Entfernung von Calciumfluorid-, Magnesiumfluorid-, Natriumfluorsilicat-, Kaliumfluorsilicat- und/oder Fluoraluminat-Krusten aus kohlenwasserstoffhaltigen Bohrlöchern und zur Minimierung oder Eliminierung des Quellens von Ton in einer unterirdischen Formation, die von dem Bohrloch durchdrungen wird, wobei das Verfahren umfasst:
(A) Pumpen einer Bohrlochbehandlungszusammensetzung mit einem pH zwischen ungefähr 0 bis ungefähr 3,0 in das Bohrloch, und umfassend:
(a) eine Phosphonatsäure, einen Ester oder ein Salz davon, wobei das Phosphonat die Formel aufweist: 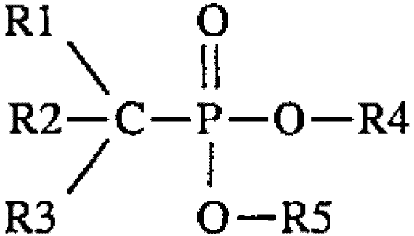 wobei R1, R2 und R3 unabhängig aus Wasserstoff, Alkyl, Aryl, Phosphon-, Phosphonat-, Phosphat-, Aminophosphonsäure, Aminophosphonat-, Acyl-, Amin-, Hydroxy- und Carboxyl-Gruppen ausgewählt sind, und R4 und R5 unabhängig aus Wasserstoff, Natrium, Kalium, Ammonium oder einem organischen Rest ausgewählt sind;
(b) eine Fluorwasserstoffsäure-Quelle;
(c) ein quaternäres Ammoniumsalz der Formel:
N(R⁶)(R⁷)(R⁸)(R⁹)Y⁻
wobei R⁶, R⁷, R⁸ und R⁹ unabhängig eine C₁-C₆-Alkyl-Gruppe oder eine Hydroxyalkyl-Gruppe sind, wobei die Alkyl-Gruppe vorzugsweise ein C₁-C₆-Alkyl ist; und
(d) ein Aminoalkylsiloxan; und
(B) Entfernen anorganischer oder silicatischer Krusten aus dem Bohrloch, wobei die Menge an quaternärem Ammoniumsalz und die Menge des Organosilans in der Bohrlochbehandlungszusammensetzung jeweils zwischen ungefähr 0,01 bis ungefähr 10 Volumenprozent, bezogen auf das Gesamtvolumen der Bohrlochbehandlungszusammensetzung, beträgt, wobei vorzugsweise entweder das Kation des quaternären Ammoniumsalzes N,N,N-Trimethylethanolammonium ist, oder wobei die wässrige Bohrlochbehandlungszusammensetzung ferner eine borhaltige Verbindung enthält, die aus der Gruppe bestehend aus (i.) Fluorborsäure und/oder (ii.) Bor-Verbindungen, die einen BF₄⁻-Komplex bilden können, wenn sie F₄⁻ oder einer Fluorwasserstoffsäure-Quelle ausgesetzt werden, ausgewählt wird, und ferner umfassend die Bildung eines BF₄⁻-Komplexes.

## Revendications

1. Procédé de renforcement de la productivité d'une formation calcaire ou siliceuse contenant des hydrocarbures comprenant :
(A) le pompage dans le trou de forage pénétrant dans la formation d'une composition de traitement de puits comprenant :
a) un acide phosphonate, un ester ou un sel de celui-ci, dans lequel le phosphonate a pour formule : 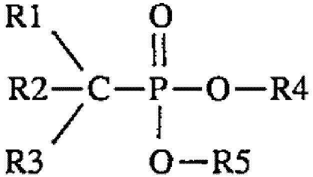 où R1, R2 et R3 sont indépendamment sélectionnés parmi l'hydrogène, un groupement alkyle, aryle, phosphonique, phosphonate, phosphate, acide aminophosphonique, aminophosphonate, acyle, amine, hydroxy et carboxyle et R4 et R5 sont indépendamment sélectionnés parmi l'hydrogène, le sodium, le potassium, l'ammonium ou un radical organique ;
(b) une source d'acide fluorhydrique ;
(c) un sel d'ammonium quaternaire ; et
(d) un organosilane ; et
(B) l'empêchement de la formation ou l'inhibition de la formation d'écailles de fluorure inorganique dans le puits de forage et/ou la formation.

2. Procédé selon la revendication 1, dans lequel le pH de la composition de traitement du puits se situe entre environ 0 et environ 3.

3. Procédé selon la revendication 1, dans lequel la quantité de sel d'ammonium quaternaire dans la composition aqueuse de traitement du puits se situe entre environ 0,01 et environ 10 pour cent en volume sur la base du volume total de la composition de traitement du puits.

4. Procédé selon la revendication 1, dans lequel la quantité de l'organosilane dans la composition de traitement du puits se situe entre environ 0,01 et environ 10 pour cent en volume sur la base du volume total de la composition de traitement du puits.

5. Procédé selon la revendication 1, dans lequel les écailles inorganiques ou siliceuses sont sélectionnées dans le groupe constitué du fluorure de calcium, du fluorure de magnésium, du fluorosilicate de sodium, du fluorosilicate de potassium et du fluoroaluminate.

6. Procédé selon la revendication 1, dans lequel la quantité d'acide phosphonate, d'ester ou de sel de celui-ci dans la composition aqueuse de traitement du puits se situe entre environ 0,1 et environ 10 pour cent en volume sur la base du volume total de (a) et (b) et d'eau.

7. Procédé selon la revendication 1, dans lequel la composition aqueuse de traitement de puits comprend en outre un composé contenant du bore sélectionné dans le groupe constitué de (i.) l'acide fluoroborique et/ou (ii.) de composés de bore capables de former un complexe de BF₄⁻ lorsqu'ils sont exposés à F₄⁻ ou à une source d'acide fluorhydrique et comprenant en outre la formation d'un complexe de BF₄⁻, de préférence dans lequel :
(a) le composé contenant du bore a pour formule R₆R₇R₈BO₃, dans lequel chacun des R₆, R₇ et R₈ est indépendamment l'hydrogène ou un groupement alkyle ou alkylène non substitué ou substitué ; ou
(b) le composé contenant du bore a pour formule : 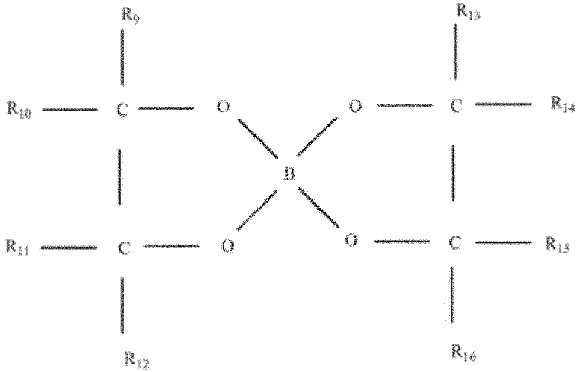 où chacun de R₉, R₁₀, R₁₁, R₁₂, R₁₃, R₁₄, R₁₅ et R₁₆ est indépendamment sélectionné parmi l'hydrogène ou un groupement alkyle ou alcényle substitué ou non substitué ; ou
c) la quantité de composé contenant du bore dans la composition aqueuse de traitement du puits est celle qui est suffisante pour obtenir entre environ 0,5 et environ 10 g de complexe de BF₄⁻ par 100 cm³ de (a), (b) et d'eau.

8. Procédé selon la revendication 1, dans lequel la composition aqueuse de traitement du puits est introduite dans le trou de forage au cours d'une opération de fracturation, de reconditionnement de restauration ou d'acidification de la matrice.

9. Procédé permettant d'empêcher et/ou d'inhiber le gonflement de l'argile dans une formation souterraine pénétrée par un trou de forage, qui comprend les étapes consistant à :
(A) pomper dans le trou de forage une composition aqueuse de traitement du puits comprenant :
a) un acide phosphonate, un ester ou un sel de celui-ci, dans lequel le phosphonate a pour formule : 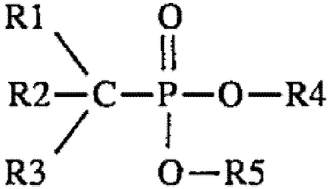 où R1, R2 et R3 sont indépendamment sélectionnés parmi l'hydrogène, un groupement alkyle, aryle, phosphonique, phosphonate, phosphate, acide aminophosphonique, aminophosphonate, acyle, amine, hydroxy et carboxyle et R4 et R5 sont indépendamment sélectionnés parmi l'hydrogène, le sodium, le potassium, l'ammonium ou un radical organique ;
(b) une source d'acide fluorhydrique ;
(c) un sel d'ammonium quaternaire ; et
(d) un organosilane ; et
(B) minimiser ou éliminer la quantité d'argile gonflée dans la formation.

10. Procédé selon la revendication 9, dans lequel le pH de la composition de traitement du puits se situe entre environ 0 et environ 3, la quantité de sel d'ammonium quaternaire dans la composition aqueuse de traitement du puits se situe entre environ 0,01 et environ 10 pour cent en volume sur la base du volume total de la composition de traitement du puits, et la quantité de l'organosilane dans la composition de traitement du puits se situe entre environ 0,01 à environ 10 pour cent en volume sur la base du volume total de la composition de traitement du puits.

11. Procédé selon la revendication 9, dans lequel la composition aqueuse de traitement du puits comprend en outre un composé contenant du bore sélectionné dans le groupe constitué de (i.) l'acide fluoroborique et/ou (ii.) de composés du bore capables de former un complexe de BF₄⁻ lorsqu'ils sont exposés à F₄⁻ ou à une source d'acide fluorhydrique et comprenant en outre la formation d'un complexe de BF₄⁻.

12. Procédé selon les revendications 1 ou 9, dans lequel le sel d'ammonium quaternaire est représenté par la formule :
N(R⁶)(R⁷)(R⁸)(R⁹)Y⁻
où R⁶, R⁷, R⁸ et R⁹ sont indépendamment un groupement alkyle en C₁-C₆ ou un groupement hydroxyalkyle, dans lequel le groupement alkyle est de préférence un alkyle en C₁-C₆ ; et Y⁻ est un halogénure, un perchlorate, un thiocyanate, un cyanate, une carboxylase en C₁-C₆, un sulfate d'alkyle, un méthanesulfonate, BX₄⁻, PF₆⁻, AsF₆⁻, SbF₆⁻, NO₂⁻, NO₃⁻ ou SO₄⁻, de préférence dans lequel Y est -Cl, ou dans lequel le cation du sel d'ammonium quaternaire est le N,N,N-triméthyléthanolammonium.

13. Procédé selon les revendications 1 ou 9, dans lequel le sel d'ammonium quaternaire a des unités récurrentes sélectionnées dans le groupe constitué des suivantes :
A. 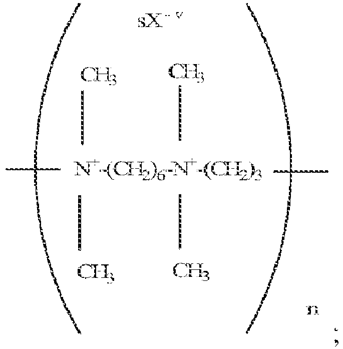
B. 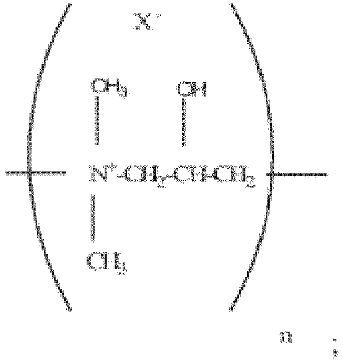
C. 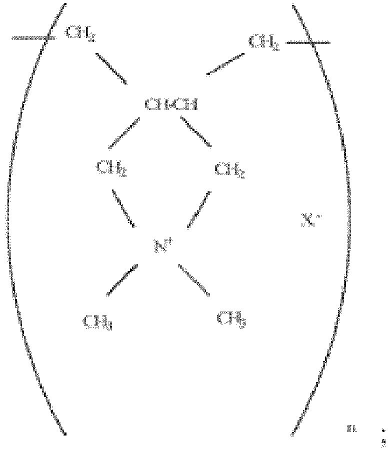 et
D. 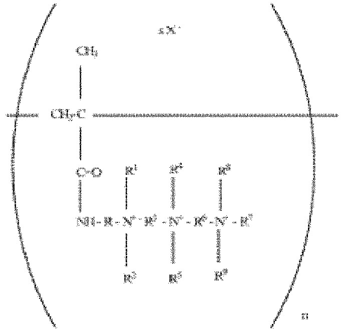
où R et R³ sont indépendamment sélectionnés dans le groupe constitué d'un groupement alkylène ayant environ 2 à environ 4 atomes de carbone ; R¹, R², R⁴, R⁵, R⁷, R⁸ et R⁹ sont indépendamment sélectionnés dans le groupe constitué des groupements méthyle et éthyle ;
R⁶ est sélectionné dans le groupe constitué d'un groupement alkylène non substitué ayant environ 2 à 4 atomes de carbone et un groupement alkylène substitué ayant environ 2 à environ 4 atomes de carbone et contenant un groupement hydroxy ; X est un anion sélectionné dans le groupe constitué d'un halogène, d'un sulfate de méthyle, d'un sulfate et d'un nitrate ; v représente la valence de l'anion représenté par X ; et s est un nombre entier égal au nombre desdits anions nécessaire pour maintenir une neutralité électronique, de préférence dans lequel le sel d'ammonium quaternaire a pour formule :

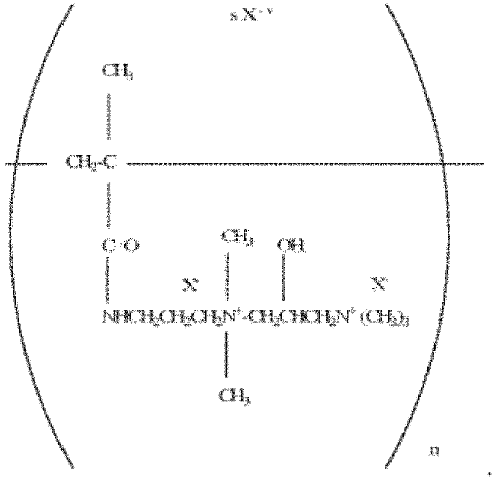

14. Procédé selon les revendications 1 ou 9, dans lequel l'organosilane est au moins l'un des suivants :
(a) un composé à base de silane de formule : 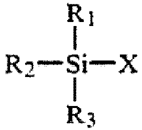 où X est un halogène, R₁ est un radical organique ayant 1 à environ 50 atomes de carbone, et R₂ et R₃ sont des halogènes identiques ou différents ou des radicaux organiques ayant 1 à environ 50 atomes de carbone ;
(b) un composé à base de silane de formule :
R-Si(OR')₃
où R est une chaîne de carbone aliphatique ramifiée ou linéaire qui est saturée ou insaturée, et possède environ 1 à environ 10 atomes de carbone ; et dans lequel chaque R' est indépendamment une chaîne de carbone ramifiée ou linéaire qui est saturée ou insaturée, et qui a environ 1 à environ 4 atomes de carbone ; ou
(c) un composé à base de siloxane de formule :
R-Si(OR')₂-O-Si(OR")₂-R
où R est une chaîne de carbone aliphatique ramifiée ou linéaire qui est saturée ou insaturée, et possède environ 1 à environ 10 atomes de carbone ; et dans lequel chaque R' et chaque R" sont indépendamment une chaîne de carbone ramifiée ou linéaire qui peut être saturée ou insaturée et qui possède environ 1 à environ 4 atomes de carbone, de préférence dans lequel l'organosilane est un aminoalkylsiloxane.

15. Procédé d'élimination des écailles de fluorure de calcium, de fluorure de magnésium, de fluorosilicate de sodium, de fluorosilicate de potassium et/ou de fluoroaluminate des trous de forage producteurs d'hydrocarbures et de minimisation ou d'élimination du gonflement de l'argile dans une formation souterraine pénétrée par le puits de forage, le procédé comprenant les étapes consistant à :
(A) pomper dans le trou de forage une composition de traitement du puits ayant un pH entre environ 0 et environ 3,0 et comprenant :
a) un acide phosphonate, un ester ou un sel de celui-ci, dans lequel le phosphonate a pour formule : 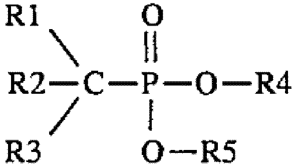 où R1, R2 et R3 sont indépendamment sélectionnés parmi l'hydrogène, un groupement alkyle, aryle, phosphonique, phosphonate, phosphate, acide aminophosphonique, aminophosphonate, acyle, amine, hydroxy et carboxyle et R4 et R5 sont indépendamment sélectionnés parmi l'hydrogène, le sodium, le potassium, l'ammonium ou un radical organique ;
(b) une source d'acide fluorhydrique ;
(c) un sel d'ammonium quaternaire de formule :
N(R⁶)(R⁷)(R⁸)(R⁹)Y⁻
où R⁶, R⁷, R⁸ et R⁹ sont indépendamment un groupement alkyle en C₁-C₆ ou un groupement hydroxyalkyle dans lequel le groupement alkyle est de préférence un alkyle en C₁-C₆ ; et
(d) un aminoalkylsiloxane ; et
(B) éliminer les écailles inorganiques ou siliceuses du puits de forage, dans lequel la quantité de sel d'ammonium quaternaire et la quantité de l'organosiloxane dans la composition de traitement du puits sont chacune comprises entre environ 0,01 et environ 10 pour cent en volume sur la base du volume total de la composition de traitement du puits, de préférence dans lequel le cation du sel d'ammonium quaternaire est le N,N,N-triméthyléthanoammonium, ou dans lequel la composition aqueuse de traitement du puits comprend en outre un composé contenant du bore sélectionné dans le groupe constitué de (i.) l'acide fluoroborique et/ou (ii.) de composés de bore capables de former un complexe de BF₄⁻ lorsqu'ils sont exposés à F₄⁻ ou à une source d'acide fluorhydrique et comprenant en outre la formation d'un complexe de BF₄⁻ .
